# EUROPEAN PATENT APPLICATION

(11) **EP 4 556 118 A1**
(43) Date of publication of application: **21.05.2025**
(21) Application number: 23210392.9
(22) Date of filing: 16.11.2023
(51) Int. Cl.: B01J 31/02, B01J 31/16, B01J 31/18, B01J 29/03

(54) **CATALYTIC SYSTEM COMPRISING AN IONIC LIQUID, A MOLECULAR CATALYST AND A MESOPOROUS SUPPORT**

(71) Applicant: Umicore AG & Co. KG, 63457 Hanau-Wolfgang (DE)
(72) Inventor: PICCIRILLI, Luca, 1364 Copenhagen (DK); JANSSENS, Ton, 2880 Bagsværd (DK); FREY, Annika, 63457 Hanau (DE); KARCH, Ralf, 63801 Kleinostheim (DE)

(57) **Abstract**

The present invention relates to a catalytic system comprising a catalyst, an ionic liquid and a mesoporous support, wherein the catalyst is not chemically bound to the mesoporous support, wherein the mesoporous support has a BET surface of at least 500 m²/g, as determined by ISO 9277:2022. The invention also relates to methods, uses and devices with regard to the catalytic system. Preferably, the catalytic system is used for hydrogenation and dehydrogenation of liquid organic hydrogen carriers.

## Description

### STATE OF THE ART

The present invention relates to a catalytic system comprising a catalyst, an ionic liquid and a mesoporous support, wherein the catalyst is not chemically bound to the mesoporous support, wherein the mesoporous support has a BET surface of at least 500 m²/g. The invention also relates to methods for preparing and using the catalytic system and to devices comprising the catalytic system. The catalytic system can be applied for various chemical reactions, such as and not limited to hydrogenation, dehydrogenation, oxidation, conversion of CO₂ into organic molecules, conversion of N₂ into NH₃, production of monomers, coupling reactions, depolymerization, water-gas shift. In particular, the ability to hydrogenate and dehydrogenate CO₂ or liquid organic compounds make the catalytic system suitable for application in hydrogen storage technologies based on CO₂, valorization of biomass, or liquid organic hydrogen carriers (LOHC).

Within the concept of the "Green Deal"-campaign of the EU, capture of CO₂ and decarbonization are major pillars. Capture of CO₂ relates to processes that capture and optionally convert CO₂ to other molecules, such as methanol, formic acid, methyl formate, in order to prevent CO₂ emissions to the atmosphere. Decarbonization relates to the replacement of fossil oil and natural gas with alternatives, such as ammonia or hydrogen.

CO₂ capture based on the conversion of CO₂ to other, useful molecules, such as methanol, formic acid, formaldehyde, implies a hydrogenation of CO₂. The hydrogen needed for these reactions can be produced by conventional methods, such as steam reforming, but these methods have a CO₂ footprint. Therefore, it is more desirable to use a production of hydrogen with a lower CO₂ emission. Electrolysis of water using sustainable energy sources, such as hydropower, wind, solar cells, as the primary energy source is the prime example of such a hydrogen production method. In order to facilitate the hydrogenation of CO₂, a catalyst is needed.

In the art, one type of catalysts for this reaction consists of particles on a solid support material. The particles may consist of one or more metals, or one or more oxides, or a combination thereof. The support material is a solid material, such as carbon, oxides. Known catalysts for this reaction are based on Cu often together with ZnO on an oxidic support, for example alumina, titania, zirconia, ceria, silica. Catalysts for conversion of CO₂ to methanol can also be based on other metals or oxides, such as Pd or In-oxide.

It is known in the art that by combining different metal and oxidic materials, bifunctional catalysts can be made, that combine the functions of CO₂ capture and the hydrogenation reaction. These structures can be further optimized by structuring the catalyst in such a way that a direct interaction between the two functions is created on the atomic scale. This bifunctional property is particularly exploited in catalysts based on metal-organic frameworks *(*Zhang, Q. et al., Hydrogenation on Metal-Organic Frameworks-Based Catalysts: A Mini Review. Frontiers in Chemistry 2022, 10*)*

A second type of catalysts, which is used in the art for hydrogenation of CO₂, is molecular catalysts. In contrast to the supported catalysts above, a molecular catalyst is a catalyst with a well-defined chemical structure, such as specific metalorganic compounds or enzymes. EP4011859A1 teaches that the hydrogenation and dehydrogenation at CO₂ can take place at lower temperatures using such catalysts. Metal-organic catalysts of this type consist of a metal ion, for example, but not limited to Ru, Ir, Mn, Co, Mo, Fe, Rh, Pd, Mg, which is coordinated by an organic ligand. Pincer complexes, which are characterized by 3 coplanar bonds to the metal ion, form a well-known ligand type in such catalysts. Such molecular catalysts, however, typically require the addition of some additive, for example amines, alkoxides, KOH, K₃PO₄. (Bai, S.-T. et al., Homogeneous and Heterogeneous Catalysts for Hydrogenation of CO2 to Methanol under Mild Conditions. Chem. Soc. Rev. 2021, 50 (7), 4259-4298*.*

When talking about carbonless propulsion of vehicles, hydrogen fuel is considered as a promising energy carrier, in particular if the hydrogen is produced by sustainable sources, like wind or solar energy production. On a weight basis, the heat of combustion of hydrogen gas is about three times that of hydrocarbon-based fuels, making it an efficient and attractive energy carrier. However, as a consequence of the very low density of hydrogen gas, the volume-based energy density is low, compared to hydrocarbon fuels.

There exist different ways to exploit hydrogen as an energy carrier. The application where the energy is needed will determine the way how the hydrogen is used. The most straightforward way to exploit hydrogen is to replace fossil fuels by hydrogen in essentially the same processes as used at present. For example, hydrogen can be used as a fuel in burners to generate heat, to replace natural gas, liquid petrol gas (LPG). Another example is the use of hydrogen in internal combustion engines, in which case it replaces gasoline, diesel fuel, jet fuel, or heavy fuel oil. Minor changes to the process, such as valves, burner materials, gaskets may be necessary to accommodate hydrogen in the process in such cases.

Another way to exploit hydrogen is to use fuel cells. Fuel cells are devices that convert the chemical energy of a fuel directly into electricity by electrochemical reaction with oxygen, which can be taken from air. A stream of fuel is delivered to the anode side of the cell, and oxygen to the cathode side. The anode and cathode are separated by an electrolyte. Fuel cells are classified by the kind of electrolyte, which then also determines the operating temperature, the fuel, the catalysts, and other factors. Known types of fuel cells are polymer electrolyte membrane (PEM) fuel cells, alkaline fuel cells (AFCs), phosphoric acid fuel cells (PAFCs), molten carbonate fuel cells (MCFCs) and solid oxide fuel cells (SOFCs). Whereas PEM, AFC and PAFC type fuel cells are limited to hydrogen fuel, MCFC and SOFC types can use other fuels as well, such as methanol, methane and other hydrocarbons.

Fuel cells can be used to generate energy from hydrogen on demand. In most cases, the energy is needed at a location where hydrogen production cannot take place, and therefore, the hydrogen that is required must be stored and transported to the location of the application. To date several methods are available to store hydrogen. Such methods include compression of hydrogen, liquefication of hydrogen, or chemically binding hydrogen to solid or liquid materials.

A method in the latter category is to store hydrogen in organic molecules. Liquid Organic Hydrogen Carriers (LOHCs). These are organic compounds that can be hydrogenated and dehydrogenated in a reversible manner. The hydrogenation and dehydrogenation reactions can be executed with high selectivity, without forming significant amounts of byproducts, and therefore the hydrogenation-dehydrogenation cycles can be repeated many times. Some examples of LOHCs are listed in Table 1.

**Table 1 Examples of LOHC systems.**

| LOHC hydrogenated form | LOHC dehydrogenated form |
|---|---|
| methyl cyclohexane | toluene |
| perhydro benzyl toluene | benzyl toluene |
| perhydro dibenzyl toluene | dibenzyl toluene |
| piperidine | pyridine |
| isopropanol | acetone |
| formic acid | carbon dioxide |

Many LOHCs consist of C and H atoms only, but it is possible to have LOHC systems with molecules containing other atoms commonly encountered in organic chemistry, such as N, O, S, or P. Often, LOHC systems contain aromatic compounds, which can be homoaromatic, such as toluene, or heteroaromatic, such as pyridine.

LOHCs are capable of storing useful amounts of hydrogen. The theoretical storage capacity of LOHCs consisting of C and H atoms is generally about 7 wt% H2. This storage capacity corresponds to about twice the volumetric density of H₂ at 700 bar, and is comparable to that of liquid H₂. To store the H2, the dehydrogenated LOHC is hydrogenated, and the LOHC is dehydrogenated again when the hydrogen is needed, e.g. as a fuel for a fuel cell. As the hydrogenation and dehydrogenation reactions can be controlled, the hydrogen can be stored and released on demand. The functioning of an LOHC is then described as follows. The dehydrogenated form of the LOHC corresponds to the energy state of the LOHC. From this state, the LOHC is converted into the energy-rich form by means of hydrogenation by hydrogen. In a reverse reaction, the hydrogen is released from the hydrogenated product under the formation which restitutes the original low-energy form of the LOHC. Therefore the hydrogenation and dehydrogenation reactions are reversible. Reversible means, that the materials undergo a transformation from the low-energy dehydrogenated state to an energy-rich hydrogenated state and then back to the low-energy dehydrogenated state, without a significant loss of the LOHC material. In an optimal case, these reversible steps can be repeated indefinitely.

In practice, the hydrogenation and dehydrogenation reactions require different process conditions, and both reactions require a catalyst. The hydrogenation and dehydrogenation reactions can be conducted in different locations, and in this way the LOHC materials provide a method to transport hydrogen over larger distances. A major advantage of LOHC is that hydrogen is present as gasoline-like liquid in both the energy-rich and low-energy state of the LOHC. Consequently, LOHCs can be handled easily and safely with existing infrastructure, such as drums, pumps, pipelines, tanks, oil tankers, without any significant loss or consumption of hydrogen or the LOHC materials. Particularly, advantageously usable LOHCs allow this reversible conversion under technically relevant conditions, pressure and temperature being mentioned by way of example.

Several patents and patent applications already teach the use of LOHC in connection with CO₂ capture and fuel cell applications (WO2020120261A1, WO2020064222A1, WO2018228895A1, DE102017201451A1, US2016061383AA, DE102012004444A1). The term LOHC relates to a group of chemical materials, preferably as described in Energy Environ. Sci., 2011, 4, 2767; US20100081034AA; Huang, et al., J. Am. Chem. Soc, 2009, 131 (39), pp 13898-13899; and/or Fang, et al. J Am. Chem. Soc, 2009, 131 (42), pp 15330-15338.

The hydrogenation and dehydrogenation process in the LOHC cycle requires a suitable catalyst. A first type of catalyst contains metal or metal-oxide particles supported on carbon or an oxidic support material. The metals are typically chosen from the groups of transition metals, or platinum group metals, for example Ni, Co, Pd, Pt, Rh, Ru, Pd, Ir, Re. Examples for oxidic supports are alumina, titania, silica or ceria. A catalyst can have more than one type of metal and more than one type of support material. These catalysts can, in principle, be used for both the hydrogenation and dehydrogenation part of the LOHC cycle, albeit that Ni is primarily used for the hydrogenation, and the platinum group metals, Pd, Pt, Rh, Ru, Ir, are most common in the dehydrogenation reaction.

With such catalysts, the reaction temperature will be in the range of 150 - 300°C at 20 - 50 bar for hydrogenation, and <3 bar for dehydrogenation. The high reaction temperature requires some heating of the reactor, which is a limitation in the applicability of carbon-containing molecules as hydrogen storage and is incompatible with the operative temperature of e.g. traditional PEM fuel cells.

The dehydrogenation of LOHCs is an endothermic process which runs at feasible rates only at elevated temperatures. In any case, the endothermic character of the dehydrogenation has a negative effect on the overall efficiency of an LOHC system. Hence, the heat management in an LOHC system is crucial in order to heat the LOHC reactor for generation of sufficient hydrogen to be provided for producing electricity in a fuel cell.

The reaction temperature for the dehydrogenation can be decreased by using homogeneous catalysts, but generally, they require an additive for their activation in hydrogenation or dehydrogenation reactions. These additives are typically inorganic or organic compounds, either to activate the organic reactants or to activate the catalyst itself. For example, K₃PO₄ and ZnO are added for Ru-MACHO-BH catalyzed CO₂ hydrogenation to methanol (Bai, Sels et al ACS Catal. 2021, 11, 12682). However, it is a general problem that such additives must be removed from the LOHC when the reaction has been completed. Therefore, it is desirable to provide catalytic systems which do not require such additives.

US 2022/0098034 A1 relates to catalytic systems for hydrogenation and dehydrogenation reactions. The catalyst is an organo-ruthenium complex which is chemically bound to an aluminum modified inorganic oxide support. However, the synthesis of such grafted catalysts is relatively complicated. It is another problem that a grafted catalyst cannot be adapted conveniently to a specific reaction simply by adjusting the type or ratio of catalyst and support. Besides, the catalytic efficiency could still be improved.

KR20220075530A relates to catalysts for LOHC dehydrogenation and methods of their preparation. The catalytic systems comprise metal complex catalysts and mesoporous supports. The catalyst is prepared by impregnating the support with a catalyst solution. Typically the hydrogenation and dehydrogenation reactions are performed in solution with a volatile organic solvent, which can be toxic. Therefore, purification of the hydrogen product gas is required to remove residual solvent before further processing, e.g. contacting the hydrogen with the anode of a fuel cell.

Piccirilli, L., 2022 ("Exploring the reactivity of Ru-PNP complexes in ionic liquids for small molecule transformations", PhD thesis, publisher: DTU Chemistry) discloses catalytic systems for LOHC dehydrogenation reactions. The catalytic systems are based on ruthenium complexes, ionic liquids and oxidic supports, in particular silica. However, the efficiency of such catalytic systems and methods is limited.

### PROBLEM UNDERLYING THE INVENTION

The problem underlying the present invention is to provide catalytic systems and methods which overcome the drawbacks of the prior art. The catalytic systems and methods shall be suitable for catalyzing a wide range of chemical reactions. The product yield, turnover number and turnover frequency should be high.

A specific problem underlying the invention is to provide catalytic systems which are effective for hydrogenation and dehydrogenation reactions, especially of organic molecules and CO₂. The catalytic systems shall be especially suitable for hydrogenation and dehydrogenation of liquid organic hydrogen carriers (LOHC). The catalytic systems should catalyze hydrogenation and dehydrogenation at relatively low temperature with high efficiency. The catalytic system shall be suitable for producing electricity in fuel cells, in particular PEMs.

It is a further problem that the catalytic systems should be relatively simple. They should be based on components which are generally available, and which thus do not need to be synthesized or modified by preceding reactions. Preferably, the catalytic systems should be flexible, and can be adapted conveniently to a specific reaction and device. It is a further problem to provide catalytic systems which can include sufficiently large amounts of active catalyst.

### DISCLOSURE OF THE INVENTION

Surprisingly, it was found that the problem underlying the invention is overcome by catalytic systems, methods, uses and devices according to the claims. Further embodiments of the invention are outlined throughout the description.

Subject of the invention is a catalytic system, preferably for hydrogenation and dehydrogenation of a liquid organic hydrogen carrier (LOHC), which comprises a catalyst, an ionic liquid and a mesoporous support, wherein the catalyst is not chemically bound to the mesoporous support, wherein the mesoporous support has a BET surface of at least 500 m²/g, as determined by DIN ISO 9277:2022.

As used herein, the term "catalytic system" means that the components are in contact with each other. The solid support and the compounds, which are the ionic liquid and the catalyst, have been mixed. Typically, the catalytic system is provided in a device.

The catalytic system comprises a supported ionic liquid phase (SILP). The ionic liquid is present at least on the surface of the mesoporous support. The ionic liquid is also present in the pores of the mesoporous support. At least a portion of the catalyst is also distributed in the pores of the mesoporous support.

The catalyst is not chemically bound to the mesoporous support. This means that there is no covalent linkage between the mesoporous support and the catalyst, as for example described for the grafted catalysts in US2022/0098034A1. Thus, the catalyst is a discrete compound. Typically, it is essentially dissolved in the ionic liquid.

Surprisingly, it was found that the catalyst efficiency of the inventive system is high even below 200°C, for example at about 80°C or 100°C. This was unexpected, because it is known that separation processes can occur in such solid-liquid systems, which impair the required intimate contact between the catalyst and reactants, and thus reduce catalytic efficiency. Moreover, the structure of the mesoporous support in the inventive catalytic system is characterized by high levels of fine nanopores, as indicated by the BET surface above 500 m²/g. Contrary to the expectation that diffusion of components through the system would be insufficient, for example due to clogging of the pores, it was found that the catalytic system remains effective at temperatures of about 80-120°C.

The catalytic system of the invention is suitable for catalyzing chemical reactions upon contact with a reactant. The catalytic system mediates the chemical reaction during which the reactant is converted into the reaction product. In preferred embodiments, the chemical reaction is a hydrogenation, dehydrogenation, oxidation, conversion of CO₂ into organic molecules, conversion of N₂ into NH₃, production of monomers, coupling reaction, depolymerization or water-gas shift. In a preferred embodiment, the chemical reaction is a hydrogenation or dehydrogenation of a liquid organic hydrogen carrier (LOHC). Preferably, the catalytic system comprises a liquid organic hydrogen carrier compound (LOHC).

In the present disclosure, the term "LOHC" refers to the compound in hydrogenated and dehydrogenated form. Thus, the term is not to be understood narrowly such that the compound would have to be hydrogenated. The term LOHC also includes systems and compounds such as formic acid/CO₂, in which only the hydrogenated form is an organic compound.

Preferably, the reaction is conducted at a temperature between 0°C to 200°C, more preferably 40°C to 200°C. Depending on the reaction type, the temperature may be adjusted by using reaction heat or external heating.

Organic hydrogen carrier molecules can store and release hydrogen upon demand in the presence of an adequate catalyst. It is generally known in the art which LOHC compounds work best for the intended purpose, i.e. to establish a catalytic system allowing a preferably reversible hydrogenation and dehydrogenation of the LOHC under technically reasonable conditions. The organic hydrogen carrier molecule should have a sufficient hydrogenation/dehydrogenation efficiency for the intended purpose. Preferably, the organic hydrogen carrier molecule in question should have a minimal hydrogen storage and release capacity of at least 3 wt-%, more preferably at least 4 wt-% and most preferably at least 5 wt-% under test conditions. The wt-% refers to hydrogen and the molecule only.

Preferably, the LOHCs is able to undergo reversible hydrogenation and dehydrogenation within the appropriate temperature and pressure range, in particular conditions which can be established in vehicles comprising a fuel cell (working conditions). The LOHC are liquid at least at the temperature at which the hydrogenation or dehydrogenation reaction is conducted. Preferably, the LOHC is liquid at a temperature of 25°C, 80°C and/or 150°C.

In a preferred aspect, the organic hydrogen carrier molecule is selected from the group consisting of liquid organic hydrogen carrier comprising a hydrocarbon aromatic compound, liquid organic hydrogen carrier comprising a heteroaromatic compound, and non-aromatic compounds such as ketones, esters, carboxylic acids, alcohols and CO₂.

In a preferred aspect, the LOHC are selected from the group consisting of saturated or unsaturated cyclic hydrocarbons, optionally comprising N-and/or O-atoms.

In a preferred aspect, the LOHC comprises a hydrocarbon aromatic compound. A liquid organic hydrogen carrier also refers to the partially or completely dehydrogenated form. A partially hydrogenated compound still can have a reasonable H₂ capacity. Hence, when talking about hydrocarbon compounds as LOHCs in this context also the possible reaction products of a hydrogenation of the low-energy (dehydrogenated) form of the said compound is encompassed, as it is essentially the same thing in this context. For example, for the case of aromatic hydrocarbons, a partially hydrogenated form of such a compound may chemically not be an "aromatic" compound anymore. However, because it is a product of a partial hydrogenation of an aromatic compound, it is still considered to be an aromatic LOHC. The phrase "hydrocarbon aromatic compound" then refers to a compound that can be obtained by hydrogenation of an aromatic compound. Preferred are those selected from the group consisting of toluene, of benzyl toluene and diaryl methylenes such as dibenzyl toluene.

LOHC systems which are based on cyclic hydrocarbon molecules are known in the art (Heublein, N. et al. International Journal of Hydrogen Energy 2020, 45 (46), 24902-24916; Kwak et al., Energy Conversion and Management, 2021, 239, 114124). A first reference is made to polycyclic aromatic hydrocarbons that are used today as industrial heat transfer liquids like dibenzyl toluene, benzyl toluene, e.g. known under the trademark Marlotherm^{®} or their isomeric mixtures (scheme 1).

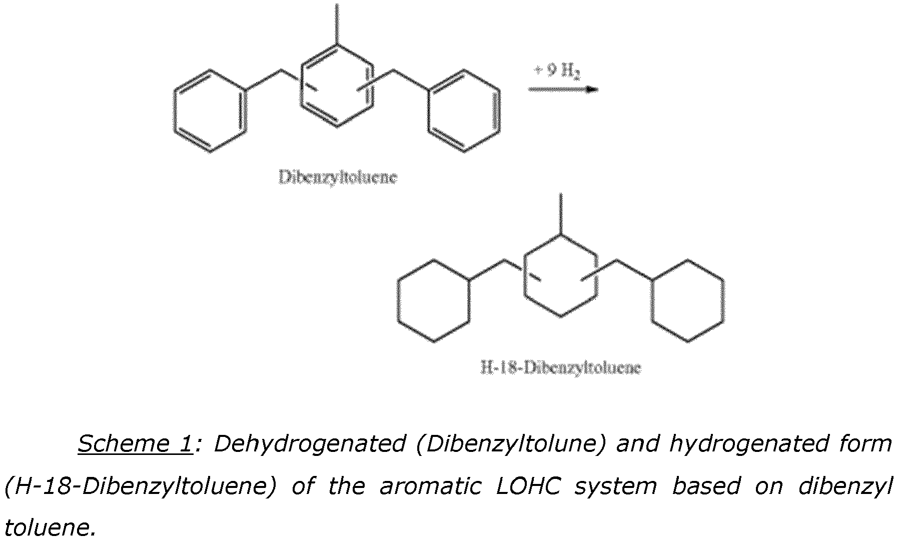

The method and the arrangement are aimed at the safe and technically simple supply to various kinds of vehicles, like for example motor vehicles, buses, lorries, forklifts, ships, trains, etc., collectively called "vehicle", with pure hydrogen. There is therefore the advantage of not reequipping filling stations for operation at very low temperatures or very high pressures with high expenditure (like in cases of liquid hydrogen), but continuing to use the existing infrastructure and storing hydrogen in the form of LOHC, which is much less flammable and much easier to handle, as compared to compressed or liquefied H₂.

In a further preferred aspect, the liquid organic hydrogen carrier comprises a heteroaromatic compound. A partially hydrogenated heteroaromatic compound still can have a reasonable H₂ capacity. It will be essentially the same thing in this context, but the compound may be chemically not an "aromatic" compound any more. Hence, when talking about heteroaromatic compounds as LOHCs in this context also the possible reaction products of a hydrogenation of said heteroaromatic compound is encompassed. The phrase "heteroaromatic compound" determines the fact that it can be obtained by hydrogenation of a heteroaromatic system composed of hydrocarbons and at least one heteroatom, like N, O, S.

It was demonstrated that replacing hydrocarbons by heteroatoms, like N, O etc. improves reversible de/hydrogenation properties (Xie, Y., Milstein, D. ACS Appl. Energy Mater. 2019, 2(6), 4302-4308; Jorschick, H. et al. Sustainable Energy Fuels 2021, 5(5), 1311-1346). Reference is to be made here to the hydrogenation/dehydrogenation of N-ethylcarbazole (NEC). In this case, N-ethylcarbazole (NEC) as the low-energy form is converted to the perhydro form (H12-NEC) as the energy-rich form according to the following reaction plan (scheme 2).

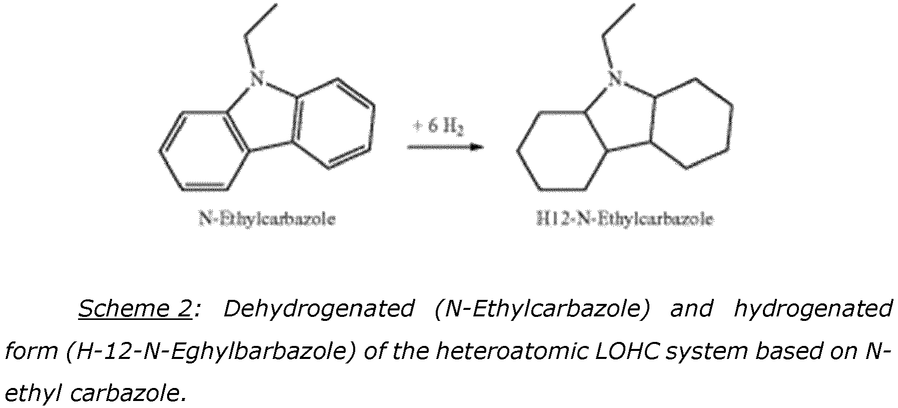

H12-NEC is a liquid that can be stored at ambient temperature and ambient pressure. The storage density for hydrogen according to this reaction is approximately twice as high in terms of volume as in a 700 bar tank filled with hydrogen. The tank can adopt any form, in contrast to a pressure container, which makes it easier to accommodate in a technical application.

In a further preferred aspect, the LOHC are non-aromatic compounds such as ketones, esters, carboxylic acids, alcohols and CO₂. In particular preferred are C₃ - C₁₀ ketones, like acetone, butanone, or acetophenone, C₁ - C₁₀ esters like formates, such as methyl formate, acetates, or propionates where the ester substituent is an organyl like an alkyl or aryl such as methyl, ethyl, propyl, benzyl, phenyl or naphthyl, C₁ - C₁₀ carboxylic acids like formic acid, acetic acid, or benzoic acid, or alcohols like methanol or isopropanol.

More preferred are LOHC systems, which are selected from dibenzyl toluene (DBT)/H18-DBT, toluene/methylcyclohexane, pyridine/piperidine, N-ethylcarbazole (NEC)/H12-NEC, COz/methanol, COz/formic acid, COz/methyl formate, acetone/isopropanol. Most preferred are LOHC compounds selected from the group consisting of acetone/isopropanol, perhydro-benzyltolu-ene/benzyltoluene, perhydrodibenzyltoluene/dibenzyltoluene, N-ethylcarbazole (NEC)/H12-NEC, COz/formic acid, and COz/methyl formate. In a preferred embodiment, the LOHC is formic acid. It was found that an especially efficient hydrogenation and dehydrogenation can be performed with the catalytic system of the invention for formic acid/CO₂.

In this regard, compounds which could theoretically be hydrogenated and dehydrogenated in the catalytic system of the invention but which would provide for too much side reactions during these cycles, or which are not manageable in the catalytic system for other reasons like low fluidity, are not encompassed by the definition of LOHC according to this invention. Also not encompassed are compounds with instability, either thermally or chemically, for example due to side reaction or decomposition under working conditions, for example by reaction with H₂O, O₂ or the catalyst. According to the invention, it is envisaged that in a reversible hydrogenation and dehydrogenation advantageous organic hydrogen carrier molecules can run through 5000 cycles under test conditions but remain the storing/releasing capacity of H₂ to at least 50%, more preferably at least 70% and most preferably at least 90% compared to a fresh catalytic system under same conditions.

Preferably, aldehydes are excluded from the definition of LOHC compounds, in particular aldehydes which might easily react with themselves and are thus not feasible for use in a reversible hydrogenation/dehydrogenation reactions as needed for present purpose.

In another preferred embodiment, the chemical reaction is a hydrogenation and dehydrogenation reaction of N₂ to NH₃, which is preferably reversible. Also this reaction can be used for storing hydrogen and releasing it on demand.

The inventive catalytic system comprises a catalyst. The catalyst should have sufficient activity in the chemical reaction, such as hydrogenation and dehydrogenation of LOHCs, under the working conditions.

In a preferred embodiment, the catalyst comprises a metal. In a preferred embodiment, the metal is one of groups 7 to 10 of the periodic table. Preferably, the metal is selected from Ni, Co, Pd, Pt, Rh, Ru, Pd, Ir and Re. Most preferably, the metal is ruthenium.

In a preferred embodiment, the catalyst is a metal complex. The metal complex can be an ionic complex, which comprises an anion and cation, or an uncharged complex. Preferably, the metal complex is a metal organic complex, which comprises at least one organic ligand.

Preferably, the metal complex comprises at least one multidentate ligand. For example, the ligand is a bidentate or tridentate ligand. Preferably, the metal catalyst comprises a tridentate ligand. Preferably, the metal complex is a tridentate ruthenium complex. Preferably, the multidentate ligand comprises at least on functional group selected from phosphine, phosphide, amine, amide, alkyl, aryl, heteroaryl and heterocyclic, or combinations thereof. It is especially preferred that the multidentate ligand comprises a heterocyclic group. Typically, the metal atom can be bound strongly to the ligand through such functional groups, thereby providing an efficient and stable catalyst.

Preferably, the catalyst is a transition metal pincer complex. Pincer ligands are tridentate chelating agents, characterized by three coplanar bonds to the central transition metal atom, typically in meridional configuration. The atoms that bind directly to the central metal atom are donors, and a pincer complex has therefore a central and two flanking donors; the donor atoms are connected together via linkers to build the ligands. The term "donor atoms" refers to the electron donor capacity of these atoms.

As such, a pincer ligand can be abbreviated by the formula:

D¹ - E - D²

wherein E is covalently bound to D¹ and D², and is complexing the transition metal, and D¹ comprises a donor center E' for complexing the transition metal, and D² comprises a donor center E" for complexing the transition metal, and E, E' and E" is an element selected from the group consisting of P, N, O, C, As, S, Ge, Se, Si, B, Al, Sb. The donor atoms E, E' and E" are preferably linked to each other by oxygen atoms, or organic moieties, for example, CH₂, ethylene, propylene, aromatics (Ar) such as phenylene, -PhNH-, -PhO-, and are preferably part of a cyclic hydrocarbon backbone, often established through aromatic or at least unsaturated cyclic or heterocyclic moieties. Preferably, the transition metal and the ligands form 5 and/or 6-ring structures when complexed.

The pincer-type catalysts comprise transition metals in a complexed form. The transition metals are complexed in a tridentate format by the pincer ligands. In a preferred aspect, the transition metal is selected from the group consisting of Ru, Mn, Fe, Ir, Os, Mo, Rh, Pd, Pt, Ni, Cu, Co, W. More preferable, the transition metal is selected from the group consisting of Ru, Ir, Fe, Mn. Utmost preferred is the transition metal Ru in this connection.

For example, pincer catalysts have been described in WO2012112758A2 or WO20200141520A1. The structure of a pincer catalyst can also be described according to one of the formulae shown in scheme 3:

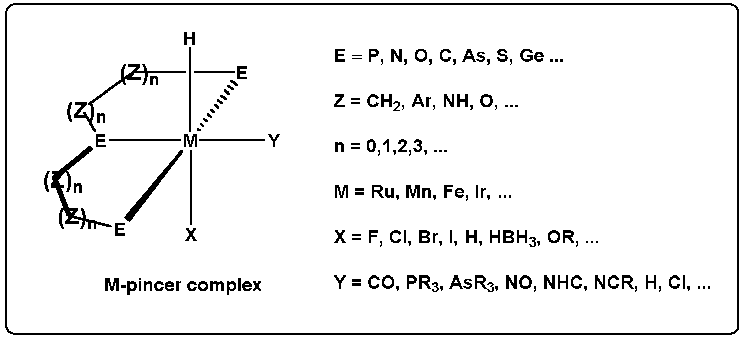

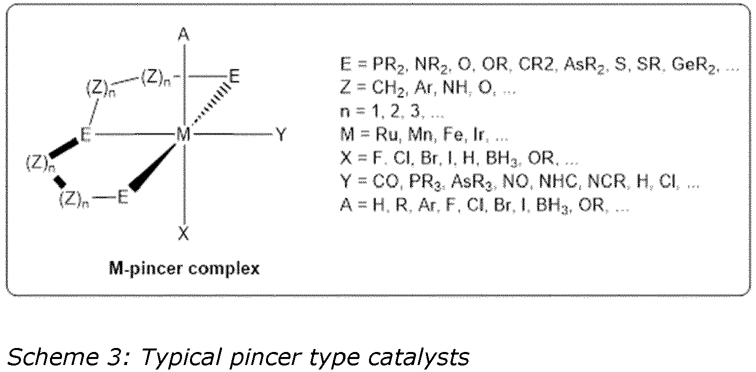

In scheme 3, the residue R can be alkyl, preferably methyl or ethyl. Original pincer-type ligands have the general tridentate form D¹CD², wherein C is a carbon atom that can potentially interact with a metal, and D¹ and D² are groups containing coordinating atoms, also referred to as electron donating atoms. The donor atoms are typically N, C, P, S, O, As, S, Ge, and the linkers (Z) are oxygen atoms, or organic moieties, for example, CH₂, ethylene, propylene, aromatics (Ar) such as phenylene, -PhNH-, -PhO- or oxygen atoms.

In many pincer ligands, the carbon atom forms a part of an aryl ring, typically phenyl. The carbon atom can be replaced by other coordinating atoms such as nitrogen or sulfur, which typically form a part of a heterocyclic ring such as a heteroaryl. A wide variety of tridentate pincer type ligand catalysts, and syntheses for making such catalysts, are known (see e.g. Crabtree, Organometallics, 2011, 30 (1), pp 17-19; Gnanamgari and Crabtree, Organometallics, 2009, 28 (3), pp 922-924). Also supported pincer-type catalysts have been used in hydrogenation reaction already, even in an ionic liquid as a solvent - so-called SILP-catalysts (J. Brünig et al. ACS Catal. 2018, 8, 2, 1048 - 1051).

Preferably, the pincer complex is of the "Ru-MACHO" ruthenium-based amino-type family (WO 2011048727; WO2013079659), Milstein ruthenium-based as well as iron-based pyridine-type pincer complexes (Milstein et al ACS Catal. 2015, 5, 2416; Milstein et al Science 2007, 317, 790; Milstein et al Acc. Chem. Res. 2015, 48, 1979), Goldman/Jones iridium-based phenyltype pincer complex (Goldman, Jones et al J. Am. Chem. Soc. 2017, 139, 8977), osmium-based amino-type pincer complexes (Gusev et al Angew. Chem. Int. Ed. 2012, 51, 2772), iron-based amino-type pincer complexes (Beller et al Angew. Chem. Int. Ed. 2013, 52, 14162), manganese-based pyridine-type pincer complexes (Kirchner, Gonsalvi et al Chem. Sci. 2017, 8, 5024), or manganese-based amino-type pincer complexes (Beller et al Angew. Chem. Int. Ed. 2016, 55, 15364).

Preferred pincer-type catalysts include carbonylchlorohydrido[bis(2-di-i-propylphosphinoethyl)amine]ruthenium(II), carbonylchlorohydrido[bis(2-(diphenylphosphinoethyl)amino]ruthenium(II), carbonylhydrido(tetrahy-droborato)[bis(2-diphenylphosphinoethyl)amino]ruthenium(II), and carbonyldihydrido[bis(2-di-i-propylphosphinoethyl)amine]ruthenium(II).

Catalyst which are suitable for hydrogenation and dehydrogenation of LOHC are also described in Shimbayashi, T.; Fujita, K. "Metal-Catalyzed Hydrogenation and Dehydrogenation Reactions for Efficient Hydrogen Storage", 2020, Tetrahedron 76(11), page 130946f. In a specific embodiment, the catalyst is an iridium complex as disclosed in US6074447.

In the inventive catalytic system, the ionic liquid and the mesoporous support form a supported ionic liquid phase (SILP). The catalyst is dissolved or dispersed in the supported ionic liquid phase.

In a preferred embodiment, the mesoporous support comprises an inorganic oxide. In this embodiment, the support substantially consists of inorganic oxide. The inorganic oxide can be a metal oxide, metalloid oxide, mixed metal oxide, or mixed metal-metalloid oxide. In one or more embodiments of the present disclosure, the inorganic oxide is an oxide of Si, Al, Mg, Mn, Ca, Sr, Cr, Zn, Zr, Ti, Nb, or a mixture thereof. Preferably, the inorganic oxide is or comprises SiO₂, TiOz, ZrO₂, Al₂O₃, SnO₂, Ta₂O₅, HfO₂, La₂O₃, V₂O₅, CeO₂, Fe₂O₃, Cr₂O₃,MoO₃, ZnO, MgO or WO₃.

Exemplary metal oxide or metalloid oxide of the heterogeneous catalysts of the present disclosure can include silica, silica-alumina, γ-alumina, a porous silica (e.g. MCM-41, SBA-15, and KCC-1), a zeolite, a porous zeolite, and/or a combination thereof. Exemplary inorganic oxide supports include alpha, beta or theta alumina (Al₂O₃), activated Al₂O₃, silicon dioxide (SiO₂), titanium dioxide (TiO₂), magnesium oxide (MgO), calcium oxide (CaO), strontium oxide (SrO), zirconium oxide (ZrO₂), chromium oxides (CrO, CrO₂, CrO₃, CrO₅, Cr₂O₃, or mixed valence species, such Cr₈O₂₁), zinc oxide (ZnO), lithium aluminum oxide (LiAlO₂), magnesium aluminum oxide (MgAlO₄), manganese oxides (MnO, MnO₂, Mn₂O₄) or lanthanum oxide (La₂O₃).

The mesoporous support has a BET (Brunauer-Emmett-Teller) surface of at least 500 m²/g, more preferably at least 600 m²/g, or at least 700 m²/g, as determined by ISO 9277:2022. Preferably, the mesoporous support has a BET surface of 500 m²/g to 2000 m²/g, more preferably of 600 m²/g to 1500 m²/g, most preferably of 700 m²/g to 1300 m²/g. Accordingly, the mesoporous support in the catalytic system is characterized by a relatively high specific surface area. Typically, the structure of the inventive mesoporous support comprises a dense array of fine nanopores. The specific surface area is higher than for conventional mesoporous materials, such as conventional mesoporous silica or mesoporous alumina. A mesoporous material with a BET surface of 500 m²/g can only be obtained by specific production methods, such as the hydrothermal method in which a crystallization is carried out from high-temperature aqueous solutions at high vapor pressure.

Preferably, the pores of the mesoporous support for the catalytic system of the invention have diameters in the range of 1-100 nm, such as 5-50 nm, or 10-30 nm, or especially 3-10 nm. Preferably, the average pore diameter is in the range of 10-30 nm, or preferably 3-10 nm. Herein, the pore size and pore size distribution are preferably determined by ISO 15901-2:2022.

Preferably, the pores have diameters in the range 1-100 nm, wherein at least 50%, preferably at least 80%, of the total volume of the pores have a diameter which is smaller than 15 nm.

In a preferred embodiment, the support has a pore volume of at least 0.4 cm³/g, more preferably at least 0.6 cm³/g, or at least 0.7 cm³/g. Preferably, the support has a pore volume of about 0.4-3 cm³/g, more preferably about 0.6-2.5 cm³/g, or about 0.7 to 2.2 cm³/g. The pore volume is preferably determined by ISO 15901-2:2022.

It was found that the catalytic systems with mesoporous supports having such pore sizes, distributions and pore volumes can provide high catalytic efficiency at relatively low temperature.

The mesoporous support is preferably selected from KIT (Korea Advanced Institute of Science and Technology, KAIST) family, MCM (Mobil Composition of Matter) family, SBA (Santa Barbara Amorphous) family, AMS (Anionic-surfactant-templated mesoporous silica) family, FSM (Folded sheets mechanism) family, FDU (Fudan University) family, KSW (Kagami Memorial Lab, Materials Science and Technology, Waseda University) family, CMI (Chimie des Materiaux Inorganiques) family, IBN (Institute of Bioengineering and Nanotechnology) family. Further suitable mesoporous materials include molecular sieve material from the MSU, HMS, OMS, TUD and MCF and families.

For example, mesoporous material such as MCM-48, KIT-6, MCM-41, MCM-50, KIT-1, SBA-1, SBA-3, SBA-12, SBA-15, SBA-16, FDU-1, FDU-12, FSM-16, MCF, MSU-X, MSU-H, and HMS silica can be used as the inorganic oxide support. In some cases, the mesoporous material is highly ordered with a hexagonal mesostructure (i.e., array of uniform channels that form tubular pores, e.g. having two openings).

In preferred embodiments, the support is MCM-48 or KIT-6. KIT-6 (CAS No. 7631-86-9) is mesoporous silica particles which are synthesized via the hydrothermal method and can have a BET surface of 600-800 m²/g. MCM-48 (CAS No. 7631-86-9) refers to porous silica prepared by the hydrothermal method and can have a BET surface of more than 800 m²/g. Both materials are commercially available from ACS Material, US.

The support can have any shape or size required for the catalytic system and/or device, in which the catalytic system is used. Preferably, the mesoporous support is provided in the form of a powder, fibers, pellets, granules or a shaped part.

The catalytic system comprises an ionic liquid. An ionic liquid is a salt in the liquid state. Preferably, the melting point of the salt is below 200°C, and more preferably below 100°C, and most preferably below 20°C. The salt should at least be liquid under working conditions. While ordinary liquids such as water and gasoline comprise molecular compounds, ionic liquids are essentially made of ions. These substances are variously called liquid electrolytes, ionic melts, ionic fluids, fused salts, liquid salts, or ionic glasses. The ionic liquid preferably is in a non-aqueous form. Preferably, the water content is below 5 wt-%, more preferably below 1 wt-%, and most preferably below 0.1 wt-%, based on the weight of the ionic liquid.

The ionic bond is usually stronger than the Van der Waals forces between the molecules of ordinary liquids. Because of these strong interactions, salts tend to have high lattice energies, manifested in high melting points. Some salts, especially those with organic cations, have lower lattice energies and thus are liquid at or below room temperature. Examples include compounds based on the 1-ethyl-3-methylimidazolium (EMIM) cation, such as EMIM:CI, EMIMAc (acetate anion), EMIM dicyanamide; (C₂H₅)(CH₃)C₃H₃N₂⁺·N(CN)₂⁻, that melts at -21°C, and 1-butyl-3,5-dimethylpyridinium bromide which becomes a glass below -24°C.

Ionic liquids are known as solvents for homogeneous catalysis. According to this invention an ionic liquid is a preferably non-aqueous ionic compound (salt) with a liquid state in the complete temperature range of the working conditions of the catalytic system. Due to the ionic character, ionic liquids have an extremely low vapor pressure, which means that they, in all practical applications, do not evaporate. Consequently, when ionic liquids are used as a solvent for homogeneous catalysis, the vapor phase in such a system is solvent-free, unlike other types of solvents, such as ethanol, cyclohexane, water, acetone, ether. This can be advantageous in the present case of dehydrogenating LOHCs in an ionic liquid. The hydrogen formed is free of any residual ionic liquid solvent and does not need to be purified further, but can be applied directly to further processing, e.g. to the fuel cell anode.

The melting point of the ionic compound depends on the type of cation and anion in the compound. Preferably, the cation in ionic liquid is selected from (imid)azolium, ammonium, phosphonium, pyrrolidinium, piperidinium, sulfonium, pyridinium. Preferably, the anion is selected from carboxylates, halides, phosphates, bis(trifluoromethanesulfonyl)imide), triflate, sulfates, borates, nitrates (scheme 4).

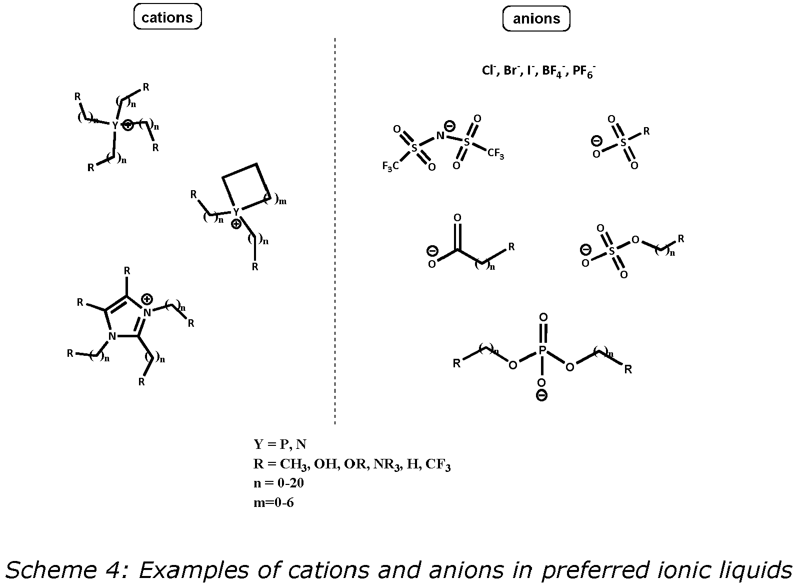

Preferably, the ionic liquid is selected from the group consisting of cations being tributylmethylphosphonium, 1-butyl-2,3-dimethylimidazolium, 1-butyl-1-methylpyrrolidinium, 1-butyl-1-methylpiperidinium, 1-ethyl-3-methylimidazolium, 1-butyl-3-methylimidazolium and anions being bis(trifluoromethanesulfonyl)imide, triflate, acetate, formate, diethylphosphate. The most preferred combinations of cations and anions are tributylmethylphosphonium bis(trifluoromethanesulfonyl)imide, 1-butyl-2,3-dime-thylimidazolium bis(trifluoromethanesulfonyl)imide, 1-butyl-1-methylpyrrolidinium triflate, or 1-butyl-1-methylpiperidinium bis(trifluoromethanesulfonyl)imide, 1-ethyl-3-methylimidazolium acetate, 1-ethyl-3-methylimidazolium formate, 1-ethyl-3-methylimidazolium di-ethylphosphate, 1-butyl-3-methylimidazolium acetate.

In an embodiment, the ionic liquid achieves 1-30%, preferably 5-20% volumetric pore filling of the support. (Supported Ionic Liquids: Fundamentals and Applications, 1st Ed., R. Fehrmann, A. Riisager, M. Haumann (Eds.), Wiley-CH, 2014.); Werner, S. et al., Chem. Eng. Technol. 2012, 35, 1962-1967; Selvam, T., Applied Catalysis A: General 445-446 (2012) 92-101; 1).

The use of the supported ionic liquid phase (SILP) catalyst in the inventive catalytic system is advantageous for the hydrogenation and dehydrogenation of LOHC. Since ionic liquid is used as a solvent for the catalyst, the corresponding SILP catalyst becomes easily separable from the rest, similar as a heterogeneous catalyst. Nonetheless, the advantages of a homogeneous catalytic system, such as stability, robustness, simplicity (no additives needed), selectivity and low-temperature activity can also be achieved. The working conditions (temperature, hydrogen pressure) are comparable to a homogeneous catalyst liquid solution.

In a preferred embodiment, the catalytic system of the invention comprises a ruthenium pincer catalyst and a mesoporous silica support, such as KIT-6 or MCM-48. Preferably, the ruthenium pincer catalyst in this system is Ru-MACHO. It was found that hydrogenation and dehydrogenation of LOHC, especially formic acid, can be especially efficient at relatively low temperature with such a catalytic system.

it is a specific advantage of the inventive catalytic system, that it is relatively simple. For example, the system does not require further solvents or additives, especially solid additives, such as compounds for activating the catalyst. Preferably, the catalytic system does not require components such as grafted catalysts, which would have to be synthesized in preceding reactions.

Preferably, the catalytic system does not comprise additives which would have to be separated from the LOHC. In a preferred embodiment, the hydrogenation and dehydrogenation are carried out only with the LOHC and catalytic system consisting of the catalyst, ionic liquid and mesoporous support, without further compounds, such as solvents or additives.

In a preferred embodiment, the catalytic system is provided in substantially solid form, preferably as a powder, pellets, granulate or pieces of defined form, such as rings. In this regard, the term "solid" means that the macroscopic form of the catalytic system is solid. Nonetheless, the ionic liquid can be present on the surface of the support in liquid form. When provided in a form such as pellets or granulate, the catalyst can be used directly in a reactor.

Typically, the catalyst in powder form requires further processing, such as extrusion or washcoating. For extrusion, a paste is created by adding a liquid to the catalyst powder, preferably water, optionally together with additional components, such as emulgators, viscosity modifiers, acids or base to regulate the pH of the slurry or binder materials, such that the desired paste properties for extrusion are achieved. The catalyst can then be extruded into pieces of predefined shape, such as trilobes, cylinders or rings, typically with a length in the range 5-30 mm and/or a diameter in the range 1-10 mm.

Subject of the invention is also a method for preparing the inventive catalytic system, comprising the steps
(a) providing a composition comprising the catalyst, the ionic liquid, the mesoporous support and a solvent,
(b) removing the solvent under reduced pressure and/or heating.

In or before step (a), the support is contacted, especially impregnated, with the liquid composition comprising the catalyst, ionic liquid and solvent. Preferably, the catalyst is mixed first with the ionic liquid, followed by addition of the solvent and support in consecutive order. The procedure is typically referred to as wet impregnation. In step (b), the catalytic system is obtained in substantially solid form. In the method, the SILP catalyst is obtained.

In a preferred embodiment, the catalytic system is produced as follows. The catalyst is dissolved in an appropriate ionic liquid. Then an organic solvent such as an alcohol or dichloromethane, and/or water, is added and the composition is thoroughly mixed. The mesoporous support is added to the composition which is then stirred, for example for about 20 min. Then, the solvent is removed under reduced pressure and, if necessary, by moderate heating, typically to a temperature below 100 °C to avoid decomposition of the catalyst or ionic liquid. The solvent is evaporated and the SILP catalyst is obtained. The concentration of the catalyst and amount of ionic liquid can be adjusted as required for the catalytic system.

Preferably, the metal content of the catalytic system is 0.1-10 wt%, preferably 2-6 wt%, most preferably 3-5 wt%, based on the total solids of the catalytic system (support and catalyst, without ionic liquid).

In a preferred embodiment, the catalytic system is applied to a solid article. For example, the solid article can be a ceramic monolith, a ceramic foam, a metal part, such as a metal plate, or a fibrous part such as paper or a porous glass fiber article.

The ceramic monolith comprises a plurality of parallel channels through which the LOHC reactant can be led. Preferably, the catalytic system is applied onto the surface of the solid article with a washcoat. A washcoat is a liquid comprising the catalytic system, a solvent, and optionally fillers, which can be distributed uniformly on the surface of the solid article. After application to the solid article, for example by impregnation, the wash coat is dried, typically by heating, and optionally also calcined. Preferably, the catalyst metal content of the washcoat is 0.05 -10 wt%, preferably 0.1-5 wt%, based on total solids in the washcoat, corresponding to the dry matter content of the washcoat slurry. A solid article having the catalytic system on the surface can be advantageous, because the shape of the solid article can support contact of the catalyst with the LOHC solution.

In another embodiment, the solid article is a ceramic foam. The catalyst is applied to the foam in a similar manner as for the ceramic monolith, by contacting a slurry containing the catalyst with the catalytic element, followed by drying, and optionally heating and calcination. The precise conditions of the processing depend on the properties of the solid article and catalyst.

In yet another embodiment, the solid article contains a fibrous material, which is preferably porous. In a preferred embodiment, the fibrous material is shaped such that it contains a plurality of parallel channels, similar to the ceramic monolith article. The catalytic system is then applied onto the surface of the solid article containing the fibrous material as a washcoat, comprising the catalytic system, a solvent, and optionally auxiliary components, such as viscosity regulating agents, binders, emulgators, surfactants. The washcoat can be distributed uniformly on the surface of the solid article by immersion of the article in the slurry, or by forcing the slurry through the solid article via using overpressure or vacuum. After application of the slurry, the solid article is dried, typically by moderate heating, and optionally also calcined. Preferably, the catalyst metal content of the washcoat is 0.05 -10 wt%, preferably 0.1-5 wt%, based on total solids in the washcoat, corresponding to the dry matter content of the washcoat slurry.

In a preferred embodiment, the porous fibrous material is shaped such that it contains a plurality of parallel channels, similar to the ceramic monolith article. The catalytic system is then applied inside the porous walls of the solid article containing the fibrous material. The catalytic system is then applied to the solid article by contacting the solid article with a slurry, comprising the catalytic system, a solvent, and optionally auxiliary components, such as viscosity regulating agents, binders, emulgators, surfactants. The properties of the slurry are chosen such that the slurry can be distributed in the pores of the fibrous material. The advantage of this embodiment is that the catalyst is contained in the volume of the fibrous material, such that a certain amount of the catalyst can be applied to the solid article, without a significant reduction in the volume of the parallel channels. This improves the contact of the reactant with the catalysts and reduces the flow resistance in the system.

Subject of the invention is also a method for conducting a chemical reaction, in which the inventive catalytic system is contacted with a reactant. In the method, the catalytic system is selected as outlined above. It catalyzes the conversion of the reactant into the reaction product in chemical reactions as outlined above. In certain embodiments, the chemical reaction can be a hydrogenation, dehydrogenation, oxidation, conversion of CO₂ into organic molecules, conversion of N₂ into NH₃, production of monomers, coupling reaction, depolymerization or water-gas shift.

In a preferred embodiment, the method is for hydrogenation or dehydrogenation of a liquid organic hydrogen carrier, comprising
(i) contacting the catalytic system of the invention with the liquid organic hydrogen carrier in a reactor, and
(ii) subjecting the reaction mixture to a temperature between 0°C to 200°C, preferably between 40°C to 200°C.

The method is especially suitable for providing hydrogen to a fuel cell for producing electricity. The reactor is a compartment, in which the catalytic system is contacted with the LOHC reactant. Preferably, the liquid reactant is led through the catalytic system. The reaction can be performed in any suitable device, such as a flow-through reactor, packed bed reactor, stirred reactor or batch reactor. In batch reactors, it is possible to perform the hydrogenation and dehydrogenation steps on the same LOHC load, without the need for reloading the LOHC after dehydrogenation. In a preferred embodiment, the catalytic system is used for a continuous-flow gas-phase reaction with the catalyst-containing SILP residing in a fixed bed reactor.

In a preferred embodiment, the reaction solution does not comprise a solvent. Thus, the LOHC is the only liquid, apart from the ionic liquid of the catalytic system. This is advantageous, because no additional solvent is required, which would have to be removed from the LOHC, and could also reduce the LOHC concentration and accessibility for the catalyst, and thus the efficiency.

In a preferred embodiment, the catalytic system is provided in a single compartment and the reaction, preferably the hydrogenation and/or dehydrogenation, is performed only in this one compartment in a continuously cyclic manner. Continuously cyclic means that the reaction, typically hydrogenation and dehydrogenation of the LOHC in the catalytic system, is performed several times in a row (more than 100, preferably more than 1000 and most preferably more than 10000 times), by adapting the conditions, such as temperature and H₂-pressure for the reactions, within the working condition window.

The compartment is preferably a reactor, tank, beaker, vessel etc., which has a fluid connection to a device for H₂-consumption or storage. Although a certain hydrogen pressure can be present, for the dehydrogenation preferably no excess H₂-pressure needs to be applied. The temperature for the reaction varies advantageously between 25°C - 200°C, more preferably between 60°C - 150°C, and most preferably between 70°C - 120°C.

The hydrogenation occurs preferably under a certain H₂-pressure, preferably in a kind of autoclave at 0.01 - 200 bar, more preferred 0.1 - 100 bar and most preferred 1 - 60 bar. The temperature for hydrogenation is preferably between 25°C - 200°C, more preferably 60°C - 150°C and most preferably 70°C - 120°C.

Subject of the invention is also the use of a catalytic system of the invention for providing hydrogen to a fuel cell for producing electricity. Preferably, the hydrogen is supplied in a purified form, e.g. as needed for application with a PEM fuel cell.

Subject of the invention is also a device which comprises the inventive catalytic system. Preferably, the device is for producing electricity, which comprises a fuel cell and the catalytic system of the invention.

The preferred aspects of the catalytic system according to the invention are applicable to the use and the device. In preferred mode the catalytic system functions in a one pot compartment in a continuously cyclic hydrogenation and dehydrogenation reaction.

The dehydrogenation of LOHCs is an endothermic process which runs at feasible rates only at elevated temperatures. The endothermic character of the dehydrogenation reaction has a negative effect on the overall efficiency of an LOHC system: the release of hydrogen from an LOHC requires a continuous supply of energy (heat) to the reactor in order to keep the reaction going. Hence, the LOHC reactor is typically heated for generation of sufficient hydrogen to be provided for the production of electricity in a fuel cell. The reactor can be heated by various means, for example direct electric heating of a catalytic element, or with a burner to generate heat by burning H₂ directly or by burning additives, such as biofuel, or by heat pumps.

Preferably, a device for producing electricity preferably further comprise a reactor containing the catalytic system and preferably a system for heating the reactor, and optionally a system for separation of the hydrogen from the LOHC, and optionally one or more heat exchangers. In one aspect, the system for heating the reactor comprises a burner to burn hydrogen (Niermann, M. et al., Energy Environ. Sci. 2019, 12 (1), 290-307). In another aspect, the system for heating the reactor comprises one or more electrically heated bodies, such as plates or meshes, connected to an external electric power source, such as a battery or a generator. In a further aspect, the electrically heated bodies are connected to the fuel cell and the fuel cell provides the electric power to the heating system.

In a preferred embodiment, the LOHC catalytic system for the release of hydrogen for a fuel contains (1) a tank containing the hydrogen rich LOHC liquid, (2) a second tank containing the dehydrogenated LOHC liquid, (3) a dehydrogenation reactor, (4) a facility for heating the reactor, such as a hydrogen burner, oil heater, electrical heating (5) a facility to purify the hydrogen product gas, which typically includes a cooler or heat exchanger to cool the product, and a gas-oil separation unit. The purified hydrogen gas can be fed into the fuel cell to generate electrical power.

The present invention relates to the hydrogen storage and release in organic liquids. The complete cycle using LOHC consists of (1) the hydrogenation of the dehydrogenated form of the LOHC system, using hydrogen gas and (2) a dehydrogenation of the hydrogenated form of the LOHC in the catalytic system. The hydrogen is thus stored as the hydrogenated form of the LOHC. The hydrogenated form of the LOHC has a higher energy density per volume than compressed or liquefied hydrogen, is easier to transport or store, and is safer to handle, due to the lower flammability of the organic liquids. Furthermore, the catalytic system mentioned here provides for a lower hydrogenation/dehydrogenation temperature and is due to the possible avoidance of additives less complex compared to systems proposed in the prior art.

The inventive catalytic system, method, use and device solve the problem underlying the invention. A catalytic system for chemical reactions, and especially for hydrogenation and dehydrogenation of LOHC, is provided, which is highly efficient even at relatively low temperature. The system and its components are relatively simple. The components and their amounts can be adapted conveniently to a specific reaction, reactant and device. The system does not require components such as grafted catalysts, which would have to be synthesized in preceding reactions, or specific additives, which would have to be separated from the product.

### EXAMPLES:

### Example 1

A catalyst powder is produced as follows: A 10 g portion of KIT-6 material (specific surface area: 705 m²/g; pore volume: 0.84 cm³/g) is calcined overnight at 500 °C, and kept under a dry atmosphere thereafter. Then, 1.8 g (3 wt.% Ru/SiO2) of Ru-MACHO (CAS 1295649-40-9), a Ru-PNP type catalyst, is dissolved and stirred in dry dichloromethane until it is fully dissolved. Then, 2.0 g of 1-ethyl-3-methylimidazolium acetate (EMIM-Ac, CAS 143314-17-4) is added to the solution and stirred for 10 minutes. The 10 g portion of KIT-6 is then added to the mixture and stirred vigorously for 20 min. After stirring, the solvent is evaporated under reduced pressure, and the catalyst is stored in a dry environment.

### Example 2:

A 10 g portion of MCM-48 material (specific surface area 830 m²/g, pore volume 0.65 cm³/g) is heated overnight at 400 °C, and kept under dry atmosphere thereafter. Then, 1.9 g carbonylchlorohydrido[bis(2-di-i-propylphosphinoethyl)amine]ruthenium(II) (min. 97%, CAS 1311164-69-8) is dissolved in dry dichloromethane and stirred until it is fully dissolved. Then 1.6 g 1-ethyl-3-methylimidazolium formate (EMIM-formate, CAS 865627-65-2) is added to the solution and stirred for 10 minutes. The 10 g of dried MCM-48 is added to the solution and stirred vigorously for 20 min. After stirring the dichloromethane is evaporated under reduced pressure, and the catalyst is stored in a dry environment.

### Example 3:

A catalyst solution is prepared by dissolving 300 mg of Ru-MACHO (5 w% Ru/SiO2, CAS 1295649-40-9) in dichloromethane (15 mL). A 0.24 mL portion of the ionic liquid 1-ethyl-3-methylimidazolium acetate (EMIM-Ac, CAS 143314-17-4) is added and the solution is stirred for 10 minutes. Then, 1 g MCM-48 is added to the solution and the mixture is stirred for 20 minutes. The solvent is then evaporated in an oven at 40°C to obtain a dry off-white powder.

### Example 4:

A 2×3 cm² FeCrAl steel plate with a catalytic coating of the invention is produced as follows: A 2×3 cm² steel FeCrAl plate is conditioned by heating to 450 °C for 2 h under ambient air, and cooled down to ambient temperature.

A 2.44 g portion of MCM-48 is mixed with 3.9 g of water. While stirring, 26.6 g of boehmite gel (10%, CAS 1318-23-6) is added, and 0.01 g hydroxyethylcellulose (CAS 9004-62-0) is added. The resulting slurry has a dry matter content of 30%. The conditioned steel plate is then dipped in the slurry and excessive slurry is allowed to drip off the plate. The wet coated plate is dried for 1 h at 90 °C, and calcined for 2 h at 500 °C in ambient air. The amount of coating on a single plate after calcination is 50 mg, corresponding to a loading of 8.3 mg/cm². A solution of the catalyst and ionic liquid is then prepared by dissolving 5 mg Ru-MACHO (CAS 1295649-40-9) and 10 mg 1-ethyl-3-methylimidazolium acetate (EMIM-Ac, CAS 143314-17-4) in 20 g (ml) dichloromethane. The coated plate is immersed in this solution, and the excess solvent is evaporated, to result in the metal plate with a catalytic coating of the invention.

### Example 5:

A catalytic system containing a SILP catalyst and a mesoporous support, which are applied on a porous fibrous article, is produced as follows: A 24.4 g portion of MCM-48 is mixed with 14.4 g of water. While stirring, 266 g of boehmite gel (10%, CAS 1318-23-6) is added, and 0.1 g hydroxyethylcellulose (CAS 9004-62-0) is added. The resulting slurry has a dry matter content of 22%. The slurry is placed on top of a porous fiberglass corrugated element of 50 mm in diameter and 76 mm high, and the bottom of the element is connected to a vacuum of about 500 mbar, to suck the slurry through the monolith. The element is then dried overnight at room temperature while flowing air through the element. After drying, the element is calcined for 2 hours at 500 °C in ambient air. After calcination, the amount of coating in the element is 30 g, corresponding to a loading of 180 g/L in the element. A solution of the catalyst and ionic liquid is then prepared by dissolving 3 g Ru-MACHO (CAS 1295649-40-9) and 10 mg 1-ethyl-3-methylimidazolium acetate (EMIM-Ac, CAS 143314-17-4) in 20 g (ml) dichloromethane. The coated element is immersed in this solution and the excess solvent is evaporated. Thereby, a catalytic element is obtained which is a SILP catalyst on a porous article.

### Example 6

The catalyst prepared according to example 3 was placed in a fixed bed reactor and heated to 120 °C, placed on top of a reservoir below the reactor containing 20 g of formic acid. The formic acid was heated at 80 °C while bubbling nitrogen through the liquid at a constant flow rate (4800 NmL/h), in order to saturate the nitrogen flow with formic acid. This results in a concentration of formic acid of about 52%, as estimated from the vapor pressure of formic acid at 80°C (524 mbar). The saturated stream of nitrogen was passed through the catalyst at 120 °C, to convert the formic acid to equimolar amounts of H₂ and CO₂. Residual formic acid was removed from the gas stream by cooling to 5°C. After removal of the formic acid, the gas stream leaving the reactor consists of the original stream of nitrogen, plus equimolar amounts of H₂ and CO₂ formed by decomposition of the formic acid. A stable gas flow of 6000 NmL/h was measured over a 4 hour period. Accordingly, the total production of H₂ is calculated 0.099 mol, which corresponds to a turnover number (TON) of 500, and an average turnover frequency (TOF) of 125 h⁻¹.

### Example 7

The catalyst prepared according to example 3 was placed in a fixed bed reactor and heated to 120 °C, placed on top of a reservoir containing a mixture of 10 g methyl formate and 6 g water (1:2 molar ratio). The mixture was kept at room temperature while bubbling nitrogen through the liquid at a constant flow rate (4800 NmL/h), in order to saturate the nitrogen flow with the methyl formate/water mixture. The saturated stream of nitrogen was passed through the catalyst at 120 °C, to convert the methyl formate/water mixture to 4 equiv. of H₂ and 2 equiv. of CO₂. The residual methyl formate/water were removed from the gas stream by cooling to 5°C. After removal of the liquid fraction, the gas stream leaving the reactor was passed through a solution of 50% NaOH in water in order to trap the produced CO₂. In this setup, 0.8 g CO₂ was collected in the NaOH solution in 20 min. This corresponds to a production of 18.2 mmol CO₂ and 36.4 mmol H₂. The turnover number (TON) is then 440, and the average turnover frequency (TOF) becomes 1473 h¹.

## Claims

1. A catalytic system comprising a catalyst, an ionic liquid and a mesoporous support, wherein the catalyst is not chemically bound to the mesoporous support, wherein the mesoporous support has a BET surface of at least 500 m²/g, as determined by ISO 9277:2022.

2. Catalytic system according to claim 1, wherein the catalyst is a metal complex, wherein the metal is one of groups 7 to 10 of the periodic table.

3. Catalytic system according to claim 2, wherein the metal complex comprises at least one multidentate ligand.

4. Catalytic system of at least one of the preceding claims, wherein the ionic liquid cation is selected from (imid)azolium, ammonium, phosphonium, pyrrolidinium, piperidinium, sulfonium and pyridinium, and wherein the ionic liquid anion is selected from carboxylates, halides, phosphates, bis(trifluoromethanesulfonyl)imide, triflate, sulfates, borates and nitrates.

5. Catalytic system of at least one of the preceding claims, wherein the mesoporous support has a BET surface of 500 m²/g to 2000 m²/g, as determined by DIN ISO 9277:2022.

6. Catalytic system of at least one of the preceding claims, wherein the pores of the support have a diameter in the range 1-100 nm, wherein at least 50% of the total volume of the pores have a diameter which is smaller than 15 nm, as determined by ISO 15901-2:2022.

7. Catalytic system of at least one of the preceding claims, wherein the mesoporous support comprises an inorganic oxide.

8. Catalytic system according to claim 7, wherein the inorganic oxide is selected from SiO₂, TiOz, ZrO₂, Al₂0₃, SnO₂, Ta₂O₅, HfO₂, La₂O₃, V₂O₅, CeO₂, Fe₂O₃, Cr₂O₃,MoO₃, ZnO, MgO and WO₃.

9. Catalytic system of at least one of the preceding claims, wherein the catalyst is a ruthenium pincer catalyst and the mesoporous support comprises silica.

10. Catalytic system at least one of the preceding claims, which comprises a liquid organic hydrogen carrier compound (LOHC).

11. A method for preparing a catalytic system of at least one of claims 1 to 10, comprising the steps
(a) providing a composition comprising the catalyst, the ionic liquid, the mesoporous support and a solvent, and
(b) removing the solvent under reduced pressure and/or heating.

12. A method for conducting a chemical reaction, in which the catalytic system of at least on of claims 1 to 10 is contacted with a reactant.

13. The method of claim 12, wherein the chemical reaction is a hydrogenation, dehydrogenation, oxidation, conversion of CO₂ into organic molecules, conversion of N₂ into NH₃, production of monomers, coupling reaction, depolymerization or water-gas shift.

14. The method of claim 12, wherein the chemical reaction is a hydrogenation or dehydrogenation of a liquid organic hydrogen carrier (LOHC), wherein the reaction is preferably conducted at a temperature between 0°C to 200°C.

15. The method of claim 14, wherein the liquid organic hydrogen carrier comprises a hydrocarbon aromatic compound, a heteroaromatic compound, and/or at least one compound selected from the group of ketones, esters, carboxylic acids, alcohols and CO₂.

16. Device for producing electricity, which comprises a fuel cell and a catalytic system according to one of claims 1 to 10.

17. Use of a catalytic system of one of claims 1 to 10 for providing hydrogen to a fuel cell for producing electricity.
